# EUROPÄISCHE PATENTANMELDUNG

(11) **EP 0 618 097 A1**
(43) Veröffentlichungstag der Anmeldung: **05.10.1994**
(21) Anmeldenummer: 94104190.7
(22) Anmeldetag: 17.03.1994
(51) Int. Cl.: B60H 1/00, G05D 23/19

(54) **Fernwirkanlage**

(30) Priorität: 31.03.1993 DE 4310475
(71) Anmelder: WEBASTO THERMOSYSTEME GmbH, D-82131 Stockdorf (DE)
(72) Erfinder: Seiler, Heinz, D-81475 München (DE)
(74) Vertreter: Wiese, Gerhard

(57) **Zusammenfassung**

Es wird eine Fernwirkanlage zur Ansteuerung eines Fahrzeugzusatzheizgeräts mit einem vorcodierten Sender und einem einer Steuereinrichtung zugeordneten Empfänger angegeben, bei welcher Sender oder Empfänger vom jeweils anderen Gerät selbstlernend codierbar ist. Sender oder Empfänger sind bei ausgeschaltetem, anzusteuerndem Fahrzeugzusatzheizgerät durch Schalten eines Steuereingangs in den Lernzustand bringbar und der Empfänger oder der Sender übertragen innerhalb eines vorbestimmten Zeitraums ihre feste Vorcodierung zum jeweils anderen Gerät, welches die Codierung in einem nichtflüchtigen Speicher speichert. Durch die Erfindung entfällt die feste Paarbildung von aufeinander abgestimmten Sendern und Empfänger, welche Transport und Lagerhaltung sowie die Ersatzteilbeschaffung bei herkömmlichen Fernwirkanlagen erschwert.

## Beschreibung

Die Erfindung betrifft eine Fernwirkanlage zur Ansteuerung eines Fahrzeugzusatzheizgeräts. Eine derartige Fernwirkanlage umfaßt einen Sender, welcher von einer Bedienungsperson mitgeführt werden kann, und einen Empfänger, welcher einer Steuereinrichtung des anzusteuernden Fahrzeugzusatzheizgeräts zugeordnet ist.

Aus US-PS 4 893 240 sind ein Fernsteuersystem und ein Verfahren zum Fernsteuern von ausgewählten Funktionen eines Fahrzeugs bekannt, das durch eine Brennkraftmaschine angetrieben wird. Hierbei wird der Empfänger mit einem persönlichen Code programmiert, nach dessen Verarbeitung die Betriebseinheit im Fahrzeug in Funktionsbereitschaft versetzt wird. Über diese Betriebseinheit können bei arbeitender Brennkraftmaschine verschiedene Fahrzeugzusatzeinrichtungen, wie Heizeinrichtungen, Entfrostungseinrichtungen, Klimaeinrichtungen und dergleichen angesteuert werden.

Ferner ist aus DE 39 35 889 A1 eine Funk-Fernwirkanlage bekannt, welche insbesondere für Fahrzeugzusatzheizgeräte bestimmt ist. Zur Verringerung des Einbauaufwandes bildet dort der Empfänger mit einer Betriebssteuereinrichtung eine Baueinheit. Der Empfänger kann funktionell in die Betriebssteuereinrichtung integriert sein oder als gesondertes Zusatzmodell hierzu ausgelegt sein.

Bei allen bisher üblichen Fernwirkanlagen sind der Sender und der Empfänger in abgestimmter Weise zur kommunizierenden Verbindung vorcodiert. Die so jeweils vorcodierten Sender und Empfänger werden immer paarweise in entsprechender Weise vorcodiert und bilden anschließend eine untrennbare Einheit. Beispielsweise gibt es hardwaremäßige Codierungen mit Hilfe von Lötnägeln oder Drahtbrücken, welche von Seiten des Herstellers der Sende- und Empfangsanlagen vorgenommen werden. Wenn nun beispielsweise ein von einer Bedienungsperson mitgeführter Sender vorlorengeht, so muß ein speziell neu gefertigter Sender als Ersatz beschaffen werden. Bei den bisherigen Fernwirkanlagen ergibt sich hierdurch einerseits ein großer Aufwand für die Vorcodierung der Paarung von Sender und Empfänger und die jeweilige paarweise Zuordnung beim Transport und der Lagerhaltung und andererseits ist die Beschaffung eines Ersatzes äußerst kompliziert, zeitaufwendig und teuer.

Demgegenüber zielt die Erfindung darauf ab, eine Fernwirkanlage der gattungsgemäßen Art bereitzustellen, welche sich mit vermindertem Fertigungsaufwand darstellen läßt und bei welcher eine Ersatzteilbeschaffung anwenderfreundlich möglich ist.

Diese Aufgabe wird durch die im kennzeichnenden Teil des Patentanspruchs 1 angegebenen Mittel gelöst. Bei der erfindungsgemäßen Fernwirkanlage hat somit eines der an der Signalübertragung beteiligten Geräte, der Empfänger oder der Sender einen Lernmodus, in welchem er die Codierung bzw. die Vorcodierung des jeweils anderen Gerätes, welche herstellerseitig erfolgt, empfangen und fest abgelegt speichern kann, sodaß die Zuordnung von Sender und Empfänger erst am Einsatzort erfolgt und vom Anwender selbst vorgenommen werden kann. Hierdurch reduziert sich der Herstellungsaufwand, denn die Geräte können einheitlich gestaltet werden und sie werden dann beispielsweise vom Anwender selbst oder einer Einbauwerkstatt am Einsatzort auf die entsprechende Vorcodierung des Senders oder Empfängers abgestimmt. Somit umfaßt die Fernwirkanlage nach der Erfindung universell einsetzbare Sender und Empfänger, welche erst durch die Aktivierung der eigenen Lernfunktion und des Lernens der Codierung des anderen Gerätes ein kommunizierendes Paar aus Sender und Empfänger bilden. Diese Ausführung einer Fernwirkanlage ist auch besonders anwenderfreundlich, da im Falle eines Verlustes eines Senders lediglich ein neuer beschafft zu werden braucht und die Abstimmung auf den Empfänger mit Hilfe des Lernmodus vom Anwender selbst vorgenommen werden kann, ohne daß man speziell programmierte Sonderanfertigungen vornehmen muß. Es kann somit jeder beliebige, vorrätige Sender sofort im Ersatzfalle zum Einsatz gebracht werden, sodaß die Ausfallzeiten, bedingt durch ein Verlorengehen des Senders, möglichst gering gehalten werden können.

In einer vorteilhaften Ausgestaltung erfolgt die Übertragung der Codierung drahtlos. Dies ist besonders dann vorteilhaft, wenn der Sender seine feste Codierung auf einen lernenden Empfänger überträgt, da die für die dabei verwendete Signalübertragungsrichtung erforderlichen Sende- bzw. Empfangsteile bei den entsprechenden Geräten ohnehin vorhanden sind. Es ist jedoch auch vorstellbar, einen Sender zusätzlich mit einem kleinen Empfangsteil auszustatten, sodaß dieser drahtlos in der Lage ist, eine Festcodierung eines Empfängers zu übernehmen und abzuspeichern.

In einer weiteren Ausgestaltung erfolgt die Übertragung der Codierung über ein Schnittstellen an beiden Geräten, d.h. Sender und Empfänger, verbindendes Kabel. Eine derartige Ausführungsform ist besonders vorteilhaft anwendbar, wenn der Empfänger Träger der Festcodierung ist und diese an einen lernenden Sender übertragen muß. Durch die Übertragung per Kabel kann auf ein separates Empfangsteil im Sender verzichtet werden.

Es ist ferner vorteilhaft, wenn die Aktivierung des Lernmodus durch eine definierte Folge von Schaltvorgängen innerhalb festgelegter Zeitintervalle erfolgt. Durch bestimmte Kombinationen von Tastendrücken in festgelegten Zeitintervallen lassen sich somit ohnehin vorhandene Bedienelemente verwenden und es ist dennoch eine Fehlbedienung weitestgehend ausgeschlossen.

In einer vorteilhaften Weiterführung dieses Gedankens wird der Lernmodus durch ein vorzugsweise mehrmaliges Ein- und Ausschalten der Spannungsversorgung des betreffenden Gerätes (Empfänger, Sender) eingeleitet. Diese Variante ist insbesondere für einen lernenden Empfänger sinnvoll, da das Empfangsteil üblicherweise nicht mit irgendwelchen Tasten ausgestattet ist. Durch ein mehrmaliges kurzzeitiges Entfernen und Wiedereinstecken einer leicht zugänglichen Sicherung am Empfänger kann dessen Lernmodus trotzdem ohne große Schwierigkeiten eingestellt werden.

Zur Vermeidung von Fehlbedienungen ist es ferner vorteilhaft, daß die Geräte (Sender, Empfänger) nach Ablauf eines vorbestimmten Zeitintervalles selbsttätig aus dem Lernmodus in ihren Grundbetriebszustand zurückkehren.

Vorzugsweise ist der nichtflüchtige Speicher des Empfängers derart ausgelegt, daß er wenigstens eine weitere Vorcocierung eines weiteren Senders speichern kann, welche auf dieselbe wie zuvor beschriebene Weise gelernt wird. In dieser Auslegung läßt sich die Fernwirkanlage nach der Erfindung unabhängig von mehreren Personen in Betrieb nehmen und aktivieren, welche unterschiedlich vorcodierte Sender haben, wodurch der Einsatzkomfort einer derartigen Fernwirkanlage wesentlich verbessert wird, ohne daß man aufwendige Umrüstarbeiten durchzuführen braucht.

Vorzugweise sind die lernend gespeicherten Vorcodierungen in einer Ringspeicherkonfiguration im nichtflüchtigen Speicher des Empfängers gespeichert. Somit können die dort während des Lernmodus des Empfängers gespeicherten Vorcodierungen der Sender hintereinander zyklisch abgefragt werden, so daß man auf einfache Weise eine Aktivierung der anzusteuernden Fahrzeugzusatzeinrichtungen erreichen kann.

Ein Betrieb der Fernwirkanlage mit mehreren berechtigten Sendern ist jedoch auch in der anderen Betriebsart mit einem fest codierten Empfänger und von diesem lernenden Sendern möglich. In diesem Falle lernen alle Sender die eine feste Codierung des Empfängers.

Die Erfindung wird nachstehend anhand bevorzugter Ausführungsformen unter Bezugnahme auf die beigefügten Zeichnungen näher erläutert. Es zeigt
- Fig 1: eine schematische Darstellung einer Fernwirkanlage mit einer drahtlosen Übertragung der Codierung,
- Fig. 2: eine schematische Darstellung einer Fernwirkanlage mit einer Übertragung der Codierung über ein Kabel.

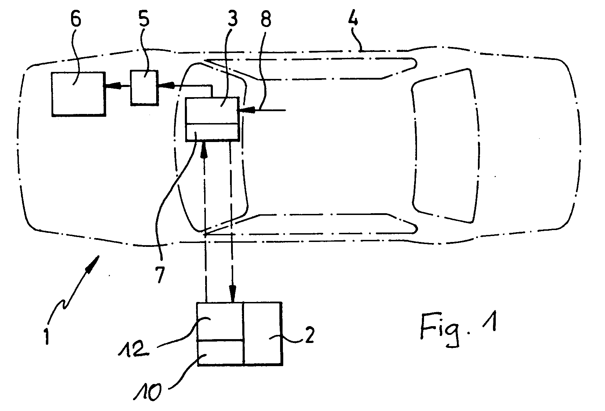

In Fig. 1 ist eine Fernwirkanlage insgesamt mit 1 bezeichnet. Die Fernwirkanlage 1 umfaßt einen Sender 2 und einen Empfänger 3. Der Sender 2 ist auf an sich übliche Weise vorcodiert. Im gezeigten Beispiel ist der Empfänger 3 in ein Fahrzeug 4 eingebaut und ist dort über nicht näher dargestellte Leitungen zur Energieversorgung mit der fahrzeugeigenen Batterie (ebenfalls nicht dargestellt) verbunden. Ausgangsseitig ist der Empfänger 3 über eine Steuereinrichtung 5 mit wenigstens einem im Fahrzeug 4 eingebauten Fahrzeugzusatzheizgerät 6 wirkverbunden. Obgleich in der Zeichnung der Empfänger 3 gesondert von der Steuereinrichtung 5 dargestellt ist, sind natürlich auch Auslegungsformen möglich, bei denen der Empfänger 3 ein Teil der Steuereinrichtung 5 bildet oder sogar in dieselbe integriert ist.

Der Empfänger 3 umfaßt einen nichtflüchtigen Speicher 7. Ferner hat der Empfänger 3 einen Steuereingang 8, welcher dazu benutzt wird, daß der Empfänger 3 in den Lernzustand überführt werden kann. Als Steuereingang 8 kann auch die Spannungsversorgung verwendet werden.

Vor der Erstinbetriebnahme der Fernwirkanlage 1 und bei ausgeschaltetem Fahrzeugzusatzheizgerät 6 erfolgt eine Aus- und Einschaltung des Empfängers 3 über den Steuerein-gang 8, wodurch der Empfänger 3 seinen Lernzustand einnimmt. Wird nun innerhalb eines vorbestimmten Zeitraums von beispielsweise 5 Sekunden durch Betätigen des Senders 2 ein die Vorcodierung des Senders 2 enthaltendes Signal als Information zum Empfänger 3 übertragen und von diesem empfangen, so wird diese empfangene Vorcodierung in dem nichtflüchtigen Speicher 7 des Empfängers 3 abgelegt. Anschließend kehrt dann der Empfänger 3 automatisch in seinen Grundempfangsbetriebszustand zurück und die vom Sender 2 empfangene Codierung, welche der Empfänger 3 auf die vorstehend beschriebene Weise gelernt hat, bleibt im nichtflüchtigen Speicher 7 des Empfängers 3 gespeichert. Nunmehr ist die Abstimmung von Sender 2 und Empfänger 3 durchgeführt und die Fernwirkanlage kann zur Aktivierung des Fahrzeugzusatzheizgerätes 6 eingesetzt werden. Hierzu betätigt der Anwender den Sender 2, und der Empfänger 3 empfängt und überprüft die Codierung, empfängt anschließend bei Feststellen einer Über-einstimmung der Codierung des Senders mit der des Empfängers die entsprechenden Steuersignale vom Sender 2 und löst dann die entsprechenden Steuerfunktionen über die Steuereinrichtung 5 beim anzusteuernden Fahrzeugzusatzheizgerät 6 aus.

Der nichtflüchtige Speicher 7 kann in Form einer Ringspeicherkonfiguration ausgelegt sein, sodaß er mehrere unterschiedliche Vorcodierungen von unterschiedlichen Sendern 2 speichern kann. Dadurch kann der Empfänger 3 von wenigstens zwei unterschiedlichen Sendern 2 unabhängig aktiviert werden und die gewünschten Steuerfunktionen weiterleiten. Dies ist insbesondere von Vorteil, wenn das Fahrzeug 4 von mehreren Personen in unregelmäßiger Abfolge genutzt wird, und jede Bedienungsperson einen eigenen Sender 2 besitzt. Auf diese Weise läßt sich somit die Fernwirkanlage 1 von mehreren Benutzern nutzen, um den Bedienungskomfort, welcher mit Hilfe einer derartigen Fernwirkanlage 1 erreicht wird, zu verbessern.

Wenn beispielsweise ein Sender 2 einer derartigen Fernwirkanlage 1 verloren geht, so braucht sich der Anwender nur einen neuen Sender 2' zu beschaffen und kann dann über die Lernfähigkeit des Empfängers 3 eine Abstimmung von neuem Sender 2' und im Fahrzeug eingebautem Empfänger 3 ohne Schwierigkeiten, wie vorstehend beschrieben, vornehmen. Als Voraussetzung dafür, daß der Empfänger 3 in seinen Lernzustand gebracht wird, ist beispielsweise vorgesehen, daß man eine Flachsicherung ein- und ausbaut, die nur für befugte Personen zugänglich ist. Somit ist eine versehentliche oder vorsätzliche Umcodierung ausgeschlossen. Ferner kann man noch als eine weitere Voraussetzung vorgeben, daß der Empfänger 3 nur in den Lernzustand überführt wird, wenn diese Ein- und Ausbauvorgänge zwei- oder mehrmals innerhalb eines vorbestimmten Zeitintervalls wiederholt werden, welches sich auf beispielsweise 5 Sekunden belaufen kann. Durch eine derartige Auslegung wird zuverlässig vermieden, daß der Empfänger 3 aufgrund einer Fehlbedienung unbeabsichtigt in den Lernzustand gebracht wird.

In einer anderen Variante ist der Empfänger 3 mit einem nichtflüchtigen Speicher 7 Träger einer festen, werkseitig vorgenommenen Codierung. Wie in Fig. 1 dargestellt, verfügt der Empfänger 2 bei dieser Variante ebenfalls über ein Empfangsteil 12. Der Sender 2 hat einen nichtflüchtigen Speicher 10, in den nach Aktivieren eines Lernmodus über einen Steuereingang 9 am Sender und eines Steuereingangs 8 am Empfänger 3 - wie durch den nach unten gerichteten gestrichelten Pfeil in Fig. 1 angedeutet - die feste Codierung des Empfängers 3 übertragen wird.

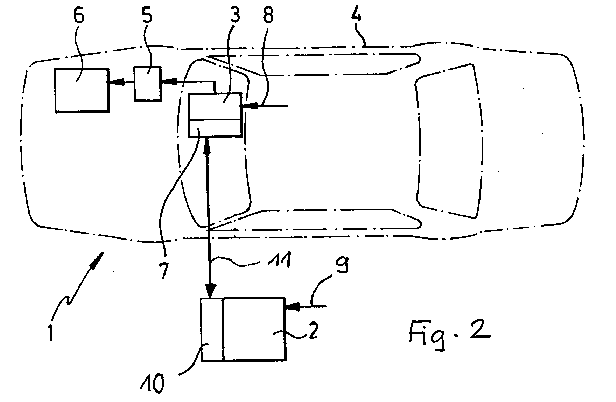

In einer weiteren, in Fig. 2 dargestellten Variante, erfolgt die Übertragung eines festen Codes vom Sender 2 auf den Empfänger 3 oder umgekehrt über ein Kabel 11, das an nicht näher bezeichneten Schnittstellen eingesteckt wird und beide Geräte miteinander verbindet. Durch die direkte Übertragung mittels eines Kabels wird ein gesondertes Empfangsteil 12 im Sender 2 entbehrlich. Statt der Verbindung mittels eines Kabels 11 kann auch eine unmittelbare Verbindung beider Geräte etwa in der Form zueinander passender Buchsen und Stecker vorgesehen sein, sodaß beispielsweise der Sender 2 für die Übertragung der Codierung mit einem Stecker in eine Buchse des Empfängers 3 eingesteckt wird.

Mittels jeder der vorstehend beschriebenen Varianten werden Transport- und Lagerhaltungszeiten und -kosten für eine Fernwirkanlage sowohl bei deren Erstinstallation als auch bei späteren Ersatzteillieferungen bedeutend reduziert.

### Bezugszeichen

- 1: Fernwirkanlage insgesamt
- 2: Sender
- 3: Empfänger
- 4: Fahrzeug
- 5: Steuereinrichtung
- 6: Fahrzeugzusatzheizgerät
- 7: nichtflüchtiger Speicher des Empfängers 3
- 8: Steuereingang des Empfängers 3
- 9: Steuereingang des Senders 2
- 10: nichtflüchtiger Speicher des Senders 2
- 11: Kabel
- 12: Empfangsteil des Senders

## Patentansprüche

1. Fernwirkanlage (1) zur Ansteuerung eines Fahrzeugzusatzheizgeräts (6) mit einem Sender (2) und einem einer Steuereinrichtung (5) zugeordneten Empfänger (3), der vor dem Empfang von Steuersignalen eine vom Sender (2) gesendete Codierung mit wenigstens einer in ihm gespeicherten Codierung vergleicht, **dadurch gekennzeichnet**, daß eines der an der Signalübertragung beteiligten Geräte (Sender (2) oder Empfänger (3)) eine feste Codierung aufweist, die nach Aktivieren eines Lernmodus in einem nichtflüchtigen Speicher (7) des jeweils anderen Gerätes (Empfänger (2) oder Sender (3)) übertragbar ist.

2. Fernwirkanlage (1) nach Anspruch (1), **dadurch gekennzeichnet**, daß die Übertragung der Codierung drahtlos erfolgt.

3. Fernwirkanlage (1) nach Anspruch 1, **dadurch gekennzeichnet**, daß die Übertragung der Codierung über ein Schnittstellen an beiden Seiten (2, 3) verbindendes Kabel (11) erfolgt.

4. Fernwirkanlage (1) nach einem der vorhergehenden Ansprüche, **dadurch gekennzeichnet**, daß die Aktivierung des Lernmodus durch eine definierte Folge von Schaltvorgängen innerhalb festgelegter Zeitintervalle erfolgt.

5. Fernwirkanlage (1) nach einem der vorhergehenden Ansprüche, **dadurch gekennzeichnet**, daß die Aktivierung des Lernmodus durch ein Ein- und Ausschalten der Spannungsversorgung des betreffenden Geräts (2, 3) erfolgt.

6. Fernwirkanlage (1) nach einem der vorangehenden Ansprüche, **dadurch gekennzeichnet**, daß die Geräte (2, 3) nach Ablauf eines vorbestimmten Zeitintervalls selbsttätig aus dem Lernmodus in ihren Grundbetriebszustand zurückkehren

7. Fernwirkanlage (1) nach einem der vorhergehenden Ansprüche, **dadurch gekennzeichnet**, daß der Empfänger (3) im Lernmodus drahtlos eine feste Codierung des Senders (2) empfängt und speichert.

8. Fernwirkanlage (1) nach Anspruch 7, **dadurch gekennzeichnet**, daß der nichtflüchtige Speicher (7) des Empfängers (3) wenigstens eine weitere Vorcodierung eines weiteren Senders (2) speichert.

9. Fernwirkanlage (1) nach Anspruch 8, **dadurch gekennzeichnet**, daß die lernend gespeicherten Vorcodierungen in einer Ringspeicherkonfiguration im nichtflüchtigen Speicher (7) des Empfängers (3) gespeichert sind.

10. Fernwirkanlage (1) nach einem der Ansprüche 1 bis 6, **dadurch gekennzeichnet**, daß wenigstens ein Sender (2) im Lernmodus eine feste Codierung des Empfängers (3) empfängt und speichert.
